# EUROPEAN PATENT SPECIFICATION

(11) **EP 2 998 427 B1**
(45) Date of publication and mention of the grant of the patent: **15.12.2021**
(21) Application number: 15184030.3
(22) Date of filing: 07.09.2015
(51) Int. Cl.: D06F 39/14, D06F 37/42, D06F 25/00

(54) **LAUNDRY TREATING APPARATUS**
WÄSCHEBEHANDLUNGSVORRICHTUNG
APPAREIL DE TRAITEMENT DU LINGE

(30) Priority: 17.09.2014 KR 20140123879
(43) Date of publication of application: 23.03.2016
(73) Proprietor: LG Electronics Inc., Seoul 07336 (KR)
(72) Inventor: LEE, Aram, Seoul 08592 (KR); PARK, Soowon, Seoul 08592 (KR); LEE, Hyuntae, Seoul 08592 (KR)
(74) Representative: Vossius & Partner Patentanwälte Rechtsanwälte mbB

(56) References cited:
- EP-A1- 2 907 910
- EP-A2- 2 620 538
- EP-A2- 2 657 393
- US-A1- 2012 217 851
- None

## Description

The present invention relates to a laundry treating apparatus.

In general, a laundry treating apparatus is a generic name for electric home appliances that are capable of washing, drying, or washing and drying laundry.

The laundry treating apparatus removes contaminants from laundry through the action of water and detergent to wash the laundry. On the other hand, the laundry treating apparatus removes moisture from laundry through a heated air supply device provided in the laundry treating apparatus to dry the laundry.

A conventional laundry treating apparatus includes a cabinet forming the external appearance thereof, a laundry receiving space provided in the cabinet to receive laundry, an introduction port provided at the cabinet such that the introduction port communicates with the laundry receiving space, and a door to open and close the introduction port.

In the conventional laundry treating apparatus, the door is generally configured to rotate about one vertical axis defined in a height direction of the cabinet.

EP 2 907 910 A1 (document under Article 54 (3) EPC) provide a laundry treating apparatus that enables a user to switch between rotational axes and prevents switching between rotational axes during rotation of a door. EP 2 657 393 A2 relates to a laundry treating apparatus which includes a door rotated along various directions to be open to open and close a laundry introduction opening.

### SUMMARY OF THE INVENTION

Accordingly, the present invention is directed to a laundry treating apparatus that substantially obviates one or more problems due to limitations and disadvantages of the related art.

An object of the present invention is to provide a laundry treating apparatus configured such that a door is rotated in different directions to open an introduction port, through which laundry is introduced.

Another object of the present invention is to provide a laundry treating apparatus that enables a user to switch between rotational axes of a door.

A further object of the present invention is to provide a laundry treating apparatus that prevents switching between rotational axes of a door while the door opens an introduction port.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a laundry treating apparatus is defined in the independent claim.

The first withdrawal prevention unit may be configured as a groove formed in the outer circumference of the second switching unit, and the second withdrawal prevention unit may be configured as a protrusion, which is inserted into the groove.

The laundry treating apparatus may further include a manipulation unit configured to move the first switching unit. The laundry treating apparatus may further include a first lock configured to fix the position of the first switching unit when the door opens the introduction port. The laundry treating apparatus may further include a second lock configured to fix the position of the second switching unit when the door opens the introduction port.

The second lock may be configured to be separated from the second switching unit when the door closes the introduction port and to be coupled to the second switching unit when the door opens the introduction port.

The second lock may include a second lock body configured to reciprocate in the door in a thickness direction of the door. The second lock may further include a second lock transfer unit configured to move the second lock body in a direction in which the second lock body becomes more distant from the introduction port when the door closes the introduction port. The second lock may further include a second lock support unit configured to elastically support the second lock body such that the second lock body is pushed toward the introduction port. The second lock may further include a second lock fastening unit configured to separate the second lock body from the second switching unit when the door closes the introduction port and to connect the second lock body to the second switching unit when the door opens the introduction port.

The second lock fastening unit may include a first fastening unit provided at the second switching unit and a second fastening unit provided at the second lock body such that the second fastening unit is coupled to the first fastening unit.

Alternatively, the second lock fastening unit may include a first fastening unit and a second fastening unit provided at the second switching unit, the first fastening unit and the second fastening unit being spaced apart from each other by a predetermined distance in a direction in which the second switching unit is moved. The second lock fastening unit may further include a second lock flange protruding from the second lock body toward the second switching unit, and a third fastening unit provided at the second lock flange such that the third fastening unit is coupled to either one selected from between the first fastening unit and the second fastening unit based on the position of the second switching unit.

The first lock may include a first lock body configured to reciprocate in a width direction of the door. The first lock body may be detachably provided at the manipulation unit, a first lock support unit configured to elastically support the first lock body. The first lock may further include a first lock transfer unit configured to separate the first lock body from the manipulation unit when the door closes the introduction port and to couple the first lock body to the manipulation unit when the door opens the introduction port.

Alternatively, the first lock may include a first lock body configured to reciprocate in the door in a thickness direction of the door. The first lock may include a second lock transfer unit configured to move the first lock body in a direction in which the first lock body becomes more distant from the introduction port while contacting the cabinet when the door closes the introduction port. The first lock may include a first lock support unit configured to elastically support the first lock body such that the first lock body is pushed toward the introduction port. The first lock may include a first fixing unit and a second fixing unit spaced apart from each other by a predetermined distance in a direction in which the first switching unit is moved A first lock flange may be further provided at the first lock body. A third fixing unit may be further provided at the first lock flange such that the third fixing unit is coupled to either one selected from between the first fixing unit and the second fixing unit based on the position of the first switching unit.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view showing a case in which a door is rotated about a second rotational axis to open an introduction port;
FIG. 2 is a view showing a manipulation unit of a laundry treating apparatus according to the present invention;
FIG. 3 is a view showing a case in which the door is rotated about a first rotational axis to open the introduction port;
FIGs. 4 to 6 are views showing a rotational axis switching unit, a first lock, and a second lock provided in the door;
FIG. 7 is a view showing the first lock;
FIG. 8 is a view showing the second lock;
FIGs. 9 and 10 are views showing the positions of the rotational axis switching unit, the first lock, and the second lock when the introduction port is opened by the door;
FIG. 11 is a view showing a withdrawal prevention unit;
FIG. 12 is a view showing another embodiment of the first lock; and
FIG. 13 is a view showing another embodiment of the second lock.

### DETAILED DESCRIPTION OF THE INVENTION

Reference will now be made in detail to the preferred embodiments of the present invention, examples of which are illustrated in the accompanying drawings. It should be noted herein that construction of an apparatus, which will hereinafter be described, and a control method of the apparatus are given only for illustrative purposes and the protection scope of the invention is not limited thereto. Wherever possible, the same reference numbers will be used throughout the drawings to refer to the same or like parts.

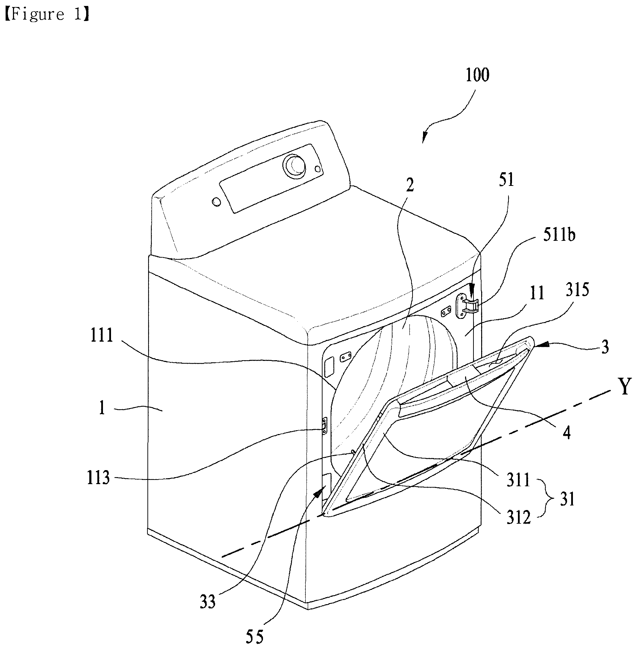

As shown in FIG. 1, a laundry treating apparatus 100 according to the present invention includes a cabinet 1 forming the external appearance thereof, a laundry receiving unit 2 provided in the cabinet 1 to define a space to receive laundry, and a door 3 provided at the cabinet 1 to open and close the laundry receiving unit 2.

The cabinet 1 includes a front panel 11 having an introduction port 111. The door 3 is provided at the front panel 11 to open and close the introduction port 111. Consequently, a user may open the introduction port 111 through the door 3 to introduce laundry (laundry to be washed or laundry to be dried) into the laundry receiving unit 2 or remove the laundry from the laundry receiving unit 2.

In a case in which the laundry treating apparatus 100 according to the present invention is a washing machine, the laundry receiving unit 2 may include a tub provided in the cabinet 1 to store wash water and a drum rotatably provided in the tub to define a space to receive laundry. In this case, the tub may have a tub introduction port communicating with the introduction port 111, and the drum may have a drum introduction port communicating with the introduction port 111.

In addition, the laundry treating apparatus 100 may further include a wash water supply unit (not shown) to supply wash water to the tub and a wash water discharge unit (not shown) to discharge wash water stored in the tub out of the cabinet 1.

On the other hand, in a case in which the laundry treating apparatus 100 according to the present invention is a drying machine, the laundry receiving unit 2 may include only a drum rotatably provided in the cabinet 1. In this case, the laundry treating apparatus 100 may further include an air supply unit (not shown) provided in the cabinet 1 to supply heated air to the drum and to discharge the air supplied to the drum out of the drum.

In addition, the laundry treating apparatus 100 according to the present invention may be an all-in-one washing and drying machine. In this case, the laundry receiving unit 2 may include a tub, a drum, and an air supply unit (not shown) provided in the cabinet 1 to supply heated air to the wash water supply unit, the wash water discharge unit, and the tub and to discharge the air in the tub out of the tub.

The door 3, which is provided at the front panel 11 to open and close the introduction port 111, is rotatable about two different rotational axes X and Y. The door 3 is coupled to the front panel 11 via a hinge unit 51, 53, and 55. The user may switch between the rotational axes X and Y of the door 3 using a manipulation unit 4.

The door 3 may include a door body 31 to open and close the introduction port 111 and a door lock 33 to fix the door body 31 to the front panel 11.

The door body 31 may include an outer frame 311 forming the outer circumferential surface of the laundry treating apparatus 100 and an inner frame 312 coupled to the outer frame 311, the inner frame 312 being disposed on the surface of the outer frame 311 that faces the front panel 11.

The door lock 33 may be provided at the surface of the inner frame 312 in a protruding fashion. In this case, the front panel 11 may further include a door lock fastening unit 113 to receive the door lock 33.

Meanwhile, the structure of the door lock 33 and the door lock fastening unit 113 to detachably fix the door body 31 to the front panel 11 is not particularly restricted.

The door body 31 may be provided with a receiving unit 315. FIG. 1 shows a case in which the receiving unit 315 is configured as a groove formed in the upper portion of the door body 31 by way of example. In this case, the manipulation unit 4 may be disposed in the groove.

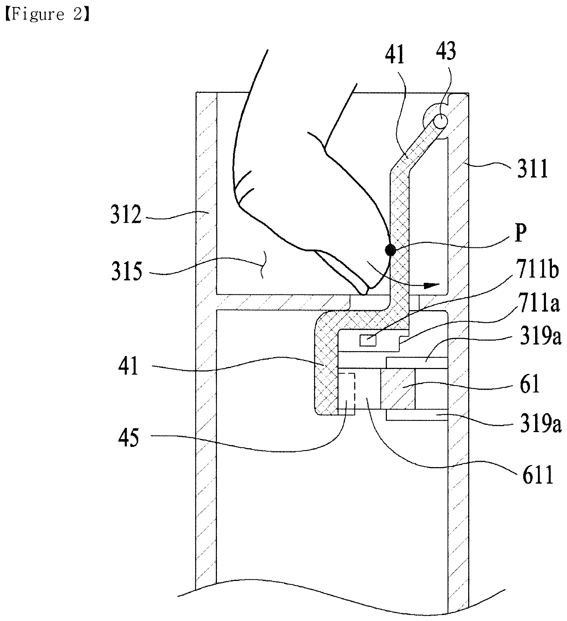

As shown in FIG. 2, the manipulation unit 4 may include a handle body 41 provided in the receiving unit 316, a body rotation shaft 43 to rotatably couple the handle body 41 to the door body 31, and a transfer unit 45 to operate a rotational axis switching unit 6 according to the operation of the handle body 41. The rotational axis switching unit 6 is a means provided in the door body 31 to allow the user to switch between the rotational axes X and Y, which will hereinafter be described in detail.

FIG. 2 shows a case in which the body rotation shaft 43 is positioned above a contact point P. Alternatively, the body rotation shaft 43 may be positioned below the contact point P.

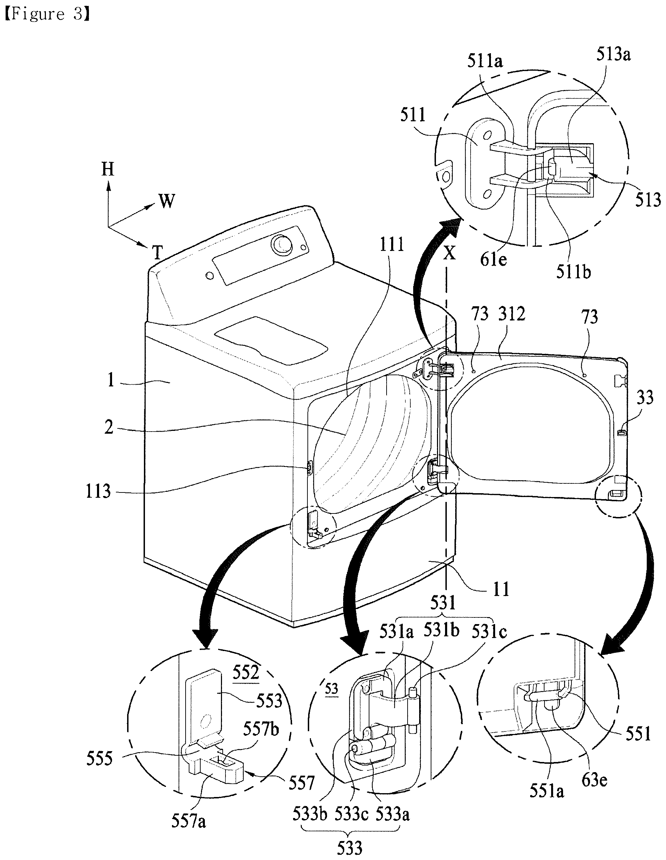

As shown in FIG. 3, the hinge unit 51, 53, and 55 to couple the door body 31 to the front panel 11 includes a first hinge 51 having a first shaft 511b, a third hinge 55 having a fourth shaft 551a, and a second hinge 53 having a second shaft 531c defining the first rotational axis X together with the first shaft 511b and a third shaft 533c defining the second rotational axis Y (see FIG. 1) together with the fourth shaft 551a.

The first hinge 51 may include a first hinge body 511 provided at either one selected from between the front panel 11 and the door body 31 such that the first shaft 511b is fixed to the first hinge body 511 and a first shaft attaching and detaching unit 513 provided at the other one selected from between the front panel 11 and the door body 31 such that the first shaft attaching and detaching unit 513 is detachably coupled to the first shaft 511b.

FIG. 3 shows a case in which the first hinge body 511 is fixed to the front panel 11, and the first shaft attaching and detaching unit 513 is provided at the door body 31, by way of example.

In this case, the first hinge body 511 is provided with a shaft support unit 511a to support the first shaft 511b. The shaft support unit 511a may protrude from the front panel 11, and may then be bent in a direction in which the shaft support unit 511a moves away from the introduction port 111 along a plane parallel to the front panel. Alternatively, the shaft support unit 511a may merely protrude from the front panel 11.

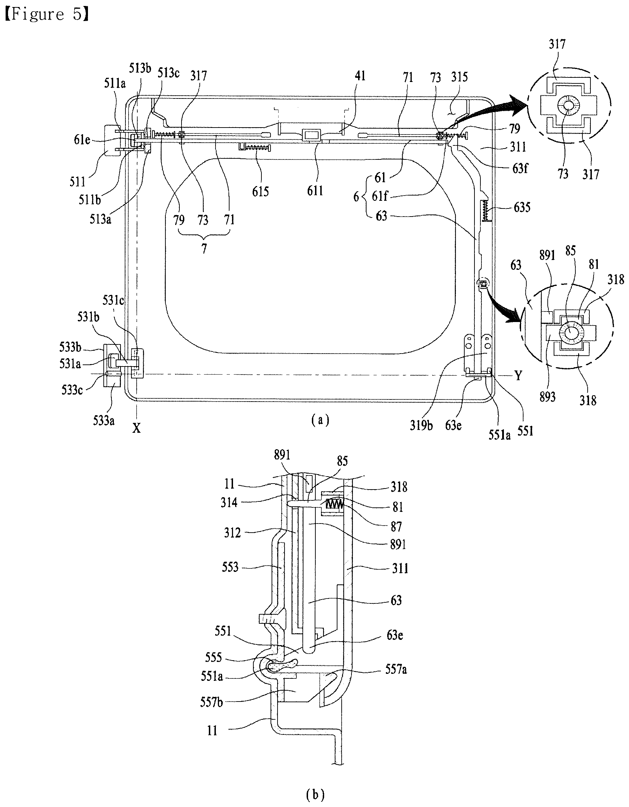

The first shaft attaching and detaching unit 513 includes a housing 513a provided at the door body 31 and a first shaft receiving unit 513b (see FIG. 5) provided in the housing 513a to define a space to receive the first shaft 511b. In this case, the first shaft receiving unit 513b may be exposed outside the inner frame 312.

Meanwhile, the housing 513a is provided with a switching unit through hole 513c (see FIG. 5) formed through the housing 513a such that a first switching unit 61 of the rotational axis switching unit 6 is inserted through the switching unit through hole 513c.

When the first switching unit 61 is reciprocated by the manipulation unit 4 in a width direction W of the door body 31, therefore, a first free end 61e of the first switching unit 61 may be exposed from the switching unit through hole 513c to close the first shaft receiving unit 513b, or may be located in the switching unit through hole 513c to open the first shaft receiving unit 513b.

When the first shaft receiving unit 513b is closed by the first free end 61e of the first switching unit 61, the first shaft 511b is prevented from being withdrawn from the first shaft receiving unit 513b and from being inserted into the first shaft receiving unit 513b.

When the first shaft receiving unit 513b is opened by the first free end 61e of the first switching unit 61, on the other hand, the first shaft 511b may be withdrawn from the first shaft receiving unit 513b, or may be inserted into the first shaft receiving unit 513b.

The second hinge 53 may include a door support unit 531, the door support unit 531 being provided with the second shaft 531c, and a cabinet coupling unit 533 to rotatably fix the door support unit 531 to the front panel 11 via the third shaft 533c.

The cabinet coupling unit 533 may include a coupling unit body 533a fixed to the front panel 11 and a rotary plate 533b rotatably coupled to the coupling unit body 533a via the third shaft 533c.

In this case, the door support unit 531 may include a support unit body 531a fixed to the rotary plate 533b and a shaft support unit 531b protruding from the support unit body 531a such that the second shaft 531c is supported by the shaft support unit 531b.

The second shaft 531c is rotatably fixed to the door body 31 and, in addition, is aligned with the first shaft 511b of the first hinge 51. As a result, the first rotational axis X is defined by the first shaft 511b and the second shaft 531c.

The third hinge 55 includes a fourth shaft 551a provided at either one selected from between the door body 31 and the front panel 11 and a fourth shaft attaching and detaching unit 552 provided at the other one selected from between the door body 31 and the front panel 11 such that the fourth shaft 551a is detachably coupled to the fourth shaft attaching and detaching unit 552. FIG. 3 shows a case in which the fourth shaft 551a is provided at the door body 31, and the fourth shaft attaching and detaching unit 552 is provided at the front panel 11, by way of example.

The fourth shaft 551a is supported by a third hinge body 551 fixed to the door body 31, and the fourth shaft 551a supported by the third hinge body 551 is exposed out of the inner frame 312.

The fourth shaft attaching and detaching unit 552 may include an attaching and detaching unit body 553 fixed to the front panel 11, a fourth shaft receiving unit 555 provided at the attaching and detaching unit body 553 to define a space to receive the fourth shaft 551a, and a switching unit receiving unit 557 protruding from the attaching and detaching unit body 553 to receive a second switching unit 63 of the rotational axis switching unit 6, which will hereinafter be described.

The fourth shaft receiving unit 555 may be configured as a receiving groove formed in the attaching and detaching unit body 553. The fourth shaft receiving unit 555 is aligned with the third shaft 553c of the second hinge 53. As a result, the fourth shaft 551a inserted into the fourth shaft receiving unit 555 defines the second rotational axis Y together with the third shaft 533c.

The switching unit receiving unit 557 may include a flange 557a protruding from the attaching and detaching unit body 553 in a state in which the second flange 557a is located below the fourth shaft receiving unit 555 and a flange through hole 557b formed through the flange 557a such that a first free end 63e of the second switching unit 63, reciprocated by the first switching unit 61 in a height direction H of the door body 31, is inserted through the flange through hole 557b.

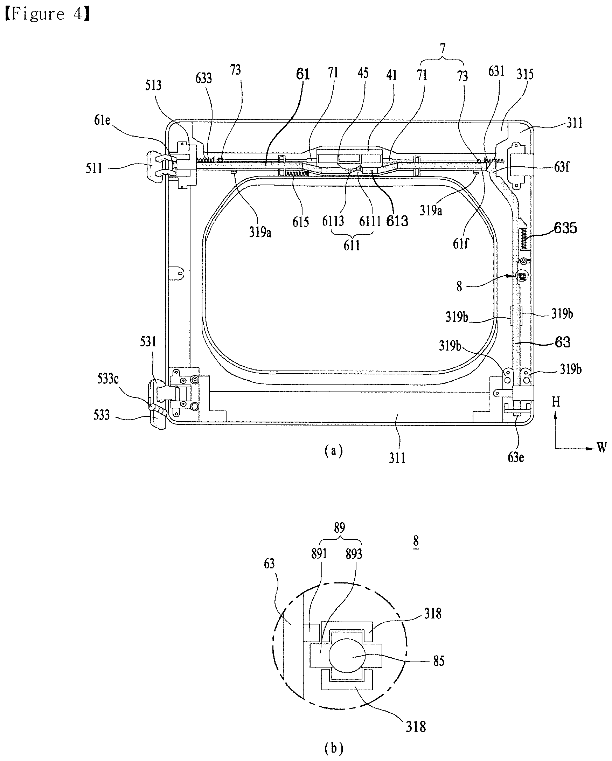

Meanwhile, as shown in FIG. 4, the rotational axis switching unit 6 is provided in the door body 31 to allow the user to select one of the rotational axes X and Y.

The rotational axis switching unit 6 may include the first switching unit 61, which is reciprocated by the manipulation unit 4 in the width direction W of the door body 31, and the second switching unit 63, which is reciprocated by the first switching unit 61 in the height direction H of the door body 31.

The first switching unit 61 may be configured as a bar disposed above the introduction port 111. In this case, the first free end 61e of the first switching unit 61 is inserted through the switching unit through hole 513c such that the free end 61e of the first switching unit 61 extends through the first shaft attaching and detaching unit 513. A second free end 61f of the first switching unit 61 contacts a second free end (a fourth free end) 63f of the second switching unit 63.

The first switching unit 61 is supported by a first switching unit guide 319a provided at at least one selected from between the outer frame 311 and the inner frame 312. FIG. 4 shows a case in which the first switching unit guide 319a is provided at the outer frame 311 to guide the movement of the first switching unit 61 by way of example.

The first switching unit 61 is provided with a contact unit 611. The contact unit 611 is a means for contacting the transfer unit 45, when the manipulation unit 4 is rotated, to move the first switching unit 61 in a direction in which the second switching unit 63 is positioned (in the rightward direction of FIG. 4).

To this end, the contact unit 611 may include a contact unit body 6111 protruding from the first switching unit 61 toward the inner frame 312 and a tilted surface 6113 provided at the contact unit body 6111 such that the tilted surface 6113 contacts the transfer unit 45.

In this case, the tilted surface 6113 may be tilted away from the first free end 61e of the first switching unit 61 as the tilted surface 6113 becomes more distant from the first switching unit 61 (i.e. as the tilted surface 6113 becomes closer to the inner frame 312).

When the user pushes the handle body 41, therefore, the transfer unit 45 pushes the tilted surface 6113. Consequently, it is possible to move the first switching unit 61 in the direction in which the second switching unit 63 is positioned using the manipulation unit 4. That is, it is possible to manipulate the manipulation unit 4 such that the first shaft receiving unit 513b is opened or closed by the first free end 61e of the first switching unit 61.

Meanwhile, the contact unit 611 is provided in the door body 31, which has a limited thickness. For this reason, the first switching unit 61 may further include a bent unit 613 bent toward the outer frame 311. In this case, the contact unit 611 may be provided at the bent unit 613.

The second switching unit 63 may be configured as a bar extending in the height direction H of the door body 31. A first free end (a third free end) 63e of the second switching unit 63 is located in a space between the fourth shaft 551a and the outer frame 311, and a second free end (a fourth free end) 63f of the second switching unit 63 contacts the second free end 61f of the first switching unit 61.

In order to easily transfer external force applied to the first switching unit 61 through the manipulation unit 4 to the second switching unit 63, at least one selected from between the second free end 61f of the first switching unit 61 and the second free end 63f of the second switching unit 63 may be further provided with a tilted switching unit surface 631. FIG. 4 shows a case in which the tilted switching unit surface 631 is provided at the second switching unit 63 by way of example.

The second switching unit 63 is supported by a second switching unit guide 319b provided at at least one selected from between the outer frame 311 and the inner frame 312. FIG. 4 shows a case in which the second switching unit guide 319b is provided at the outer frame 311 to guide the movement of the second switching unit 63 by way of example.

Meanwhile, in order to maintain a state in which the door 3 is coupled to the first rotational axis X when the door 3 closes the introduction port 111, the rotational axis switching unit 6 may be further provided with an elastic support unit to push the first switching unit 61 toward first shaft attaching and detaching unit 513.

The elastic support unit may include only a second support unit 635 to elastically support the second switching unit 63. Alternatively, the elastic support unit may further include a first support unit 615 to elastically support the first switching unit 61 in addition to the second support unit 635.

The second support unit 635 pushes the first free end 63e of the second switching unit 63 in a direction in which the first free end 63e of the second switching unit 63 moves away from the switching unit receiving unit 557, and the first support unit 615 pushes the first free end 61e of the first switching unit 61 in a direction in which the first free end 61e of the first switching unit 61 closes the first shaft receiving unit 513b.

Consequently, in a case in which through the manipulation unit 4 does not move the first switching unit 61 in a direction in which the first switching unit 61 pushes the second switching unit 63 (i.e. when the user does not manipulate the manipulation unit 4), the first free end 63e of the second switching unit 63 remains withdrawn from the switching unit receiving unit 557.

In a case in which the first free end 63e of the second switching unit 63 remains withdrawn from the switching unit receiving unit 557 by the second support unit 635, the second free end 61f of the first switching unit 61 is pushed toward the first shaft attaching and detaching unit 513 by the second free end 63f of the second switching unit 63. As a result, the first shaft 511b is prevented from being withdrawn from the first shaft receiving unit 513b by the first free end 61e of the first switching unit 61.

In the present invention, therefore, the door 3 remains rotatable about the first rotational axis X unless the user manipulates the manipulation unit 4 in a state in which the introduction port 111 is closed by the door 3.

The reason that the door 3 remains rotatable about the first rotational axis X in a state in which the introduction port 111 is closed by the door 3 is that it is advantageous to prevent the door 3 from opening the introduction port 111 due to the weight of the door 3 when the door 3 remains coupled to the first rotational axis X.

That is, in a case in which the door 3 remains connected to the second rotational axis Y when the introduction port 111 is closed by the door 3, the door 3 may be rotated about the second rotational axis Y since a direction in which gravity is applied to the door 3 is similar to a direction in which the door 3 is rotated about the second rotational axis Y. In a case in which the door 3 remains coupled to the first rotational axis X when the introduction port 111 is closed by the door 3, on the other hand, the above-mentioned problem may be prevented.

The second support unit 635 may be configured as a spring having one end fixed to the second switching unit 63 and the other end fixed to either one selected from between the outer frame 311 and the inner frame 312. In the same manner, the first support unit 615 may be configured as a spring having one end fixed to the first switching unit 61 and the other end fixed to either one selected from between the outer frame 311 and the inner frame 312.

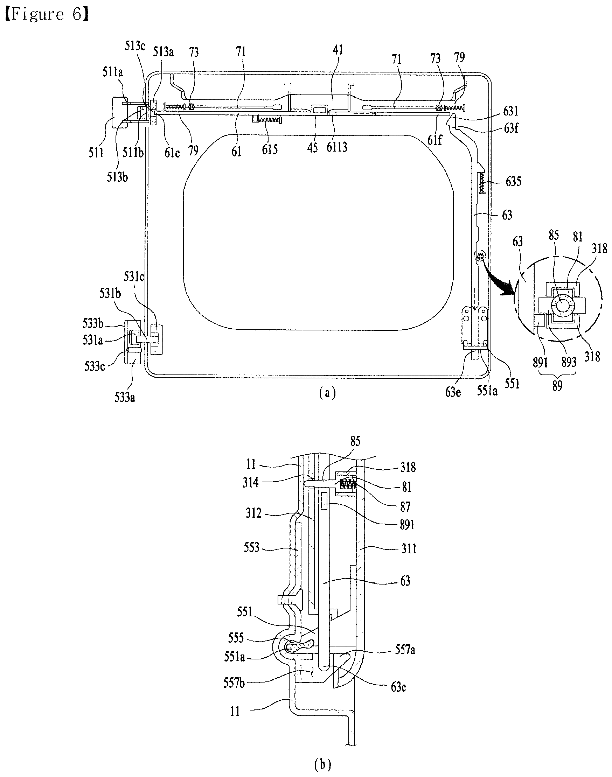

Hereinafter, switching between the rotational axes X and Y of the door 3 will be described with reference to FIGs. 5 and 6.

In a case in which the introduction port 111 is closed by the door 3 (i.e. in a case in which the door body 31 contacts the front panel 11 or in a case in which the handle body 41 is not pushed), the first switching unit 61 is pushed toward the first hinge 51 by the elastic support units 615 and 635. As a result, the first free end 61e of the first switching unit 61 prevents the first shaft 511b from being withdrawn from the first shaft receiving unit 513b.

At this time, the fourth shaft 551a remains inserted in the fourth shaft receiving unit 555, but the first free end 63e of the second switching unit 63 is not inserted through the flange through hole 557b (see FIG. 5(b)). This is because the second switching unit 63 is not inserted through the flange through hole 557b unless the first switching unit 61 is moved by the manipulation unit 4 in a direction in which the first switching unit 61 moves away from the first hinge 51 (in the rightward direction of FIG. 5(a)).

In a case in which the introduction port 111 is closed by the door 3, therefore, the door 3 may be rotated about the first rotational axis X defined by the first shaft 511b and the second shaft 531c.

At this time, when the user pulls the door body 31 away from the front panel 11 using the receiving unit 315 (i.e. when the user pulls the door body 31 without pushing the handle body 41), the door 3 is rotated about the first rotational axis X to open the introduction port 111 (see FIG. 3).

When the user pushes the handle body 4 in a state in which the introduction port 111 is closed by the door 3, on the other hand, the first switching unit 61 and the second switching unit 63 perform movement as shown in FIG. 6(a). That is, when the user pushes the handle body 41, the transfer unit 45 pushes the tilted surface 6113 provided at the contact unit 611. As a result, the first switching unit 61 moves toward the second switching unit 63.

When the first switching unit 61 moves toward the second switching unit 63, the first free end 61e of the first switching unit 61 moves toward the interior of the door body 31, and the second free end 61f of the first switching unit 61 pushes the tilted switching unit surface 631 of the second switching unit 63. Consequently, the first shaft 511b is withdrawn from the first shaft receiving unit 513b, and the first free end 63e of the second switching unit 63 is inserted through the flange through hole 557b of the third hinge 55. As a result, the fourth shaft 551a is prevented from being separated from the fourth shaft receiving unit 555 (see FIG. 6(b)).

That is, when the user pushes the handle body 41 in a state in which the introduction port 111 is closed by the door 3, the door 3 may be rotated about the second rotational axis Y defined by the fourth shaft 551a and the third shaft 533c.

At this time, when the user pulls the door body 31 away from the front panel 11 while pushing the handle body 41, the door 3 is rotated about the second rotational axis Y to open the introduction port 111 (a state of FIG. 1).

In the laundry treating apparatus 100 as described above, the first rotational axis X may be a vertical axis perpendicular to the bottom of the cabinet 1, and the second rotational axis Y may be a horizontal axis parallel to the bottom of the cabinet 1. However, the present invention is not limited thereto.

Meanwhile, in the laundry treating apparatus 100 having only the above-described structure, the first shaft 511b may be separated from the first shaft attaching and detaching unit 513 in a case in which the user pushes the handle body 41 when the door body 31 is rotated about the first rotational axis X.

In addition, in the laundry treating apparatus 100 having only the above-described structure, the handle body 41 must be kept pushed, when the door body 31 is rotated about the second rotational axis Y, in order to prevent the fourth shaft 551a from being separated from the fourth shaft receiving unit 555.

In order to solve the above problems, therefore, the laundry treating apparatus 100 according to the present invention may further include a position fixing unit 7 and 8 to fix the positions of the first switching unit 61 and the second switching unit 63 when the introduction port 111 is opened by the door 3 (i.e. when the door body 31 is separated from the front panel 11).

FIGs. 5 and 6 are views showing a case in which the position fixing unit includes both a first lock 7 to fix the position of the first switching unit 61 and a second lock 8 to fix the position of the second switching unit 63 by way of example.

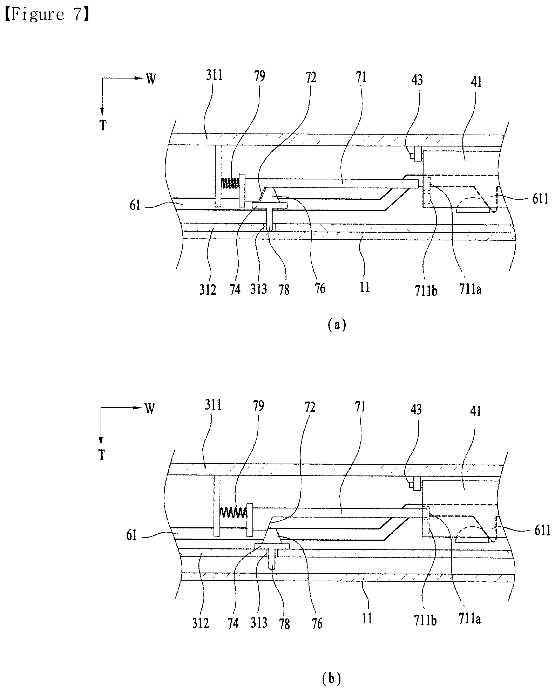

As shown in FIG. 7(a), the first lock 7 may include a first lock body 71 detachably provided at the manipulation unit 4 and a first lock transfer unit 73 to reciprocate the first lock body 71 in the door body 31 in a width direction W of the door 3.

The first lock body 71 may be formed in the shape of a bar. The first lock body 71 is elastically supported by a first lock support unit 79. The first lock support unit 79 may be configured as a spring configured to push a free end of the first lock body 71 toward the manipulation unit 4 while fixing the first lock body 71 to the door body 31.

The first lock body 71 is provided with a tilted first lock surface 72, which is pushed by the first lock transfer unit 73. The tilted first lock surface 72 may be tilted away from the manipulation unit 4 as the tilted first lock surface 72 becomes more distant from the first lock body 71 (i.e. as the tilted first lock surface 72 becomes closer to the inner frame 312).

The first lock transfer unit 73 is a means for moving the first lock body 71 in a direction in which the first lock body 71 becomes more distant from the handle body 41 when the introduction port 111 is closed by the door 3 and for moving the first lock body 71 in a direction in which the first lock body 71 becomes closer to the handle body 41 when the introduction port 111 is opened by the door 3.

To this end, the first lock transfer unit 73 may include a transfer body 74 configured to reciprocate in a thickness direction T of the door 3 and a push unit 76 and 78 to separate the first lock body 71 from the manipulation unit 4 when coming into contact with the front panel 11.

The door body 31 may further include a first guide 317 (see FIG. 5) to guide the movement of the transfer body 74.

The push unit may include a first push unit 78 fixed to the transfer body 74, the first push unit 78 being inserted through the inner frame 312, and a second push unit 76 fixed to the transfer body 74, the second push unit 76 contacting the tilted first lock surface 72. In this case, the inner frame 312 may be further provided with a through hole (a second through hole) 313, through which the first push unit 78 is inserted.

Unlike what is shown in the figures, however, the first lock transfer unit 73 may be fixed to the front panel 11. In this case, the first lock transfer unit 73 may be inserted through the through hole (the second through hole) 313 to push the tilted first lock surface 72 when the introduction port 111 is closed by the door 3.

Meanwhile, the first lock body 71 may be coupled to the handle body 41 via a first lock fastening unit 711a and 711b. In this case, the first lock fastening unit may include a first fixing unit 711a and a second fixing unit 711b provided at the handle body 41 to receive a free end of the first lock body 71.

When the user rotates the door 3 without pushing the manipulation unit 4 (i.e. when the door 3 is rotated about the first rotational axis X), the first lock body 71 is coupled to the first fixing unit 711a. When the user rotates the door 3 while pushing the manipulation unit 4 (i.e. when the door 3 is rotated about the second rotational axis Y), the first lock body 71 is coupled to the second fixing unit 711b.

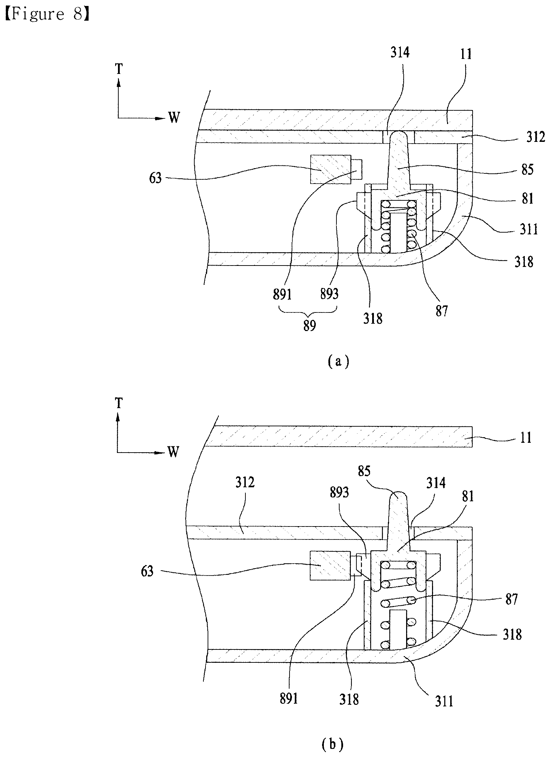

As shown in FIG. 8, the second lock 8 may include a second lock body 81 configured to reciprocate in the door 3 in the thickness direction T of the door 3, a second lock support unit 87 to elastically support the second lock body 81, a second lock transfer unit 85 to move the second lock body 81 in a direction in which the second lock body 81 becomes more distant from the front panel 11 when the introduction port 111 is closed by the door 3, and a second lock fastening unit 89 to separate the second lock body 81 from the second switching unit 63 when the introduction port 111 is closed by the door 3 and to couple the second lock body 81 to the second switching unit 63 when the introduction port 111 is opened by the door 3.

The second lock body 81 is reciprocated in the door 3 while being guided by a second guide 318 provided in the door body 31.

The second lock support unit 87 may be configured as a spring connecting the second lock body 81 with the door body 31. In this case, the second lock support unit 87 may push the second lock body 81 toward the inner frame 312 (i.e. toward the introduction port 111).

The second lock transfer unit 85 may be fixed to the second lock body 81 through the inner frame 312. In this case, the inner frame 312 may be further provided with a through hole (a first through hole) 314, through which the second lock transfer unit 85 is inserted.

Alternatively, the second lock transfer unit 85 may be fixed to the front panel 11. In this case, when the introduction port 111 is closed by the door body 31, the second lock transfer unit 85 may be inserted through the through hole (the first through hole) 314 to push the second lock body 81.

The second lock fastening unit 89 may include a first fastening unit 891 provided at the second switching unit 63 and a second fastening unit 893 provided at the second lock body 81 such that the second fastening unit 893 is detachably coupled to the first fastening unit 891.

The shape of the second lock fastening unit 89 is not particularly restricted so long as the second lock fastening unit 89 performs the above-described functions. FIG. 8 is a view showing a case in which the first fastening unit 891 protrudes from the outer circumference of the second switching unit 63, and the second fastening unit 893 protrudes from the outer circumference of the second lock body 81 to support the first fastening unit 891 based on the position of the second switching unit 63, by way of example.

Hereinafter, the operation of the door 3, which has the position fixing unit 7 and 8, will be described with reference to FIGs. 7, 8, 9, and 10.

When the introduction port 111 is closed by the door body 31, the first lock transfer unit 73 and the second lock transfer unit 85 are pushed by the front panel 11. As a result, the first lock body 71 remains separated from the manipulation unit 4 (see FIG. 7(a)), and the second fastening unit 893 of the second lock body 81 remains separated from the first fastening unit 891 (see FIG. 8(a)).

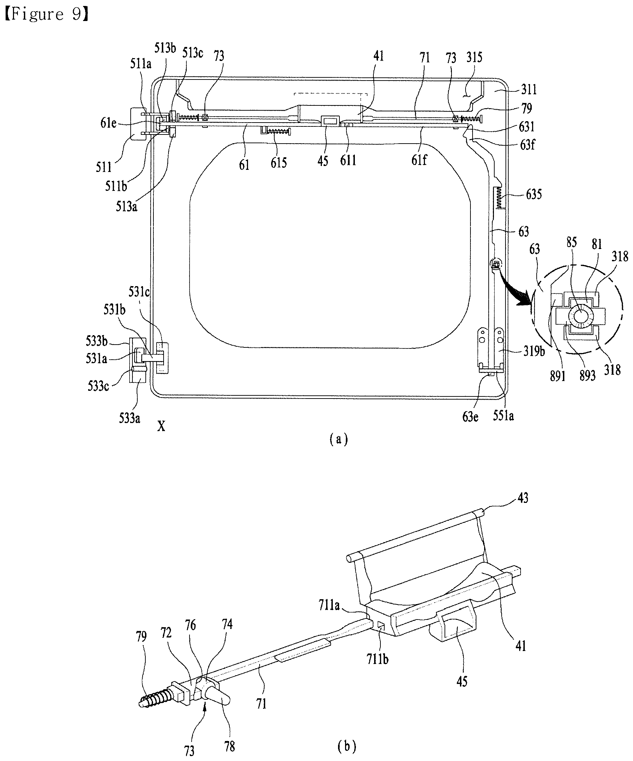

When the user separates the door body 31 from the front panel 11 (i.e. when the user rotates the door body 31 about the first rotational axis X) without pushing the manipulation unit 4 in this state, the rotational axis switching unit 6, the first lock 7, and the second lock 8 are operated as shown in FIG. 9.

That is, external force applied from the front panel 11 to the first lock transfer unit 73 and the second lock transfer unit 85 is removed. As a result, the first lock body 71 is coupled to the first fixing unit 711 a to prevent the rotation of the handle body 41 (see FIG. 9(b)), and the second fastening unit 893 of the second lock body 81 moves upward to the side of the first fastening unit 891 (see FIG. 8(b)) to prevent the movement of the second switching unit 63 toward the fourth shaft 551a.

As the rotation of the handle body 41 is prevented by the first fixing unit 711a, the first switching unit 61 does not move even when external force is applied to the handle body 41 while the door body 31 is rotated about the first rotational axis X. In the present invention, therefore, it is possible to prevent the first shaft 511b from being separated from the first shaft receiving unit 513b even when external force is applied to the handle body 41 while the door body 31 is rotated about the first rotational axis X.

Meanwhile, the first lock transfer unit 73 may be pushed by the user or any object while the door body 31 is rotated about the first rotational axis X with the result that the handle body 41 may be rotated. In the present invention, however, it is possible for the second lock 8 to prevent the first shaft 511b from being separated from the first shaft receiving unit 513b.

Assuming that the second lock 8 is not provided, when the first lock transfer unit 73 is pushed by the user or any object while the door body 31 is rotated about the first rotational axis X, the first lock body 71 is separated from the first fixing unit 711a of the manipulation unit 4. At this time, when the user pushes the handle body 41, the first free end 61e of the first switching unit 61 opens the first shaft receiving unit 513b. As a result, the door body 31 is separated from both the first rotational axis X and the second rotational axis Y (the first shaft is separated from the first shaft receiving unit 513b, and the fourth shaft is separated from the fourth shaft receiving unit 555.

In the present invention, however, when the door body 31 is separated from the front panel 11 (i.e. when the external force applied to the second lock transfer unit 85 is removed), the movement of the second switching unit 63 toward the fourth shaft 551a is prevented by the second lock 8, and therefore the movement of the first switching unit 61, which is supported by the second free end 63f of the second switching unit 63, is also prevented by the second lock 8.

In the present invention, therefore, it is possible for the second lock 8 to prevent the door body 31 from being separated from the first shaft 511b even when external force is applied to the first lock transfer unit 73 while the door body 31 is rotated about the first rotational axis X.

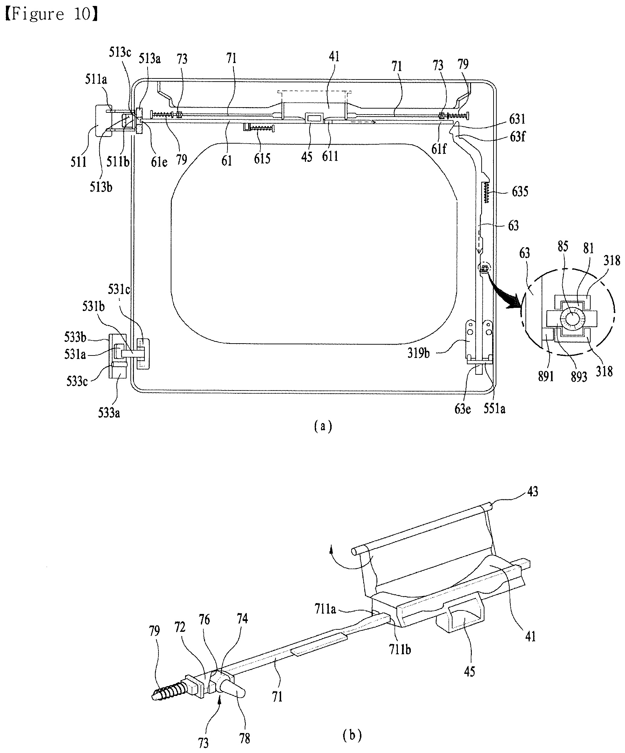

On the other hand, when the user pushes the manipulation unit 4 and then separates the door body 31 from the front panel 11 (i.e. when the user rotates the door body 31 about the first rotational axis X), the rotational axis switching unit 6, the first lock 7, and the second lock 8 are operated as shown in FIG. 10.

That is, the first switching unit 61 moves in a direction in which the first shaft receiving unit 513b is opened. As a result, the second free end 63f of the second switching unit 63 is inserted through the flange through hole 557b to prevent the fourth shaft 551a from being separated from the fourth shaft receiving unit 555.

In addition, the first lock transfer unit 73 and the second lock transfer unit 85 are separated from the front panel 11. As a result, the first lock body 71 is coupled to the second fixing unit 711b to prevent the rotation of the handle body 41, and the second fastening unit 893 of the second lock body 81 moves upward to the side of the first fastening unit 891 to prevent the movement of the second switching unit 63 toward the second free end 61 f of the first switching unit 61.

As the first lock body 71 is coupled to the second fixing unit 711b, the handle body 41 is kept rotated (i.e. the transfer unit 45, which is provided at the manipulation unit 4, keeps pushing the contact unit 611 of the first switching unit 61). In the present invention, therefore, it is possible to prevent the fourth shaft 551a from being separated from the fourth shaft receiving unit 555 even when the user keeps pushing the handle body 41 while the door body 31 is rotated about the second rotational axis Y.

Meanwhile, in a case in which only the first lock 7 is provided at the door 3, the fourth shaft 551a may be separated from the fourth shaft receiving unit 555 when the first lock transfer unit 73 is pushed while the door body 31 is rotated about the second rotational axis Y. In the present invention, however, it is possible for the second lock 8 to prevent the fourth shaft 551a from being separated from the fourth shaft receiving unit 555.

Assuming that the second lock 8 is not provided, when the first lock transfer unit 73 is pushed by the user or any object while the door body 31 is rotated about the second rotational axis Y, the first lock body 71 is separated from the second fixing unit 711b of the handle body 414.

When the first lock body 71 is separated from the second fixing unit 711b, external force applied to the contact unit 611 of the first switching unit 61 through the transfer unit 45 of the manipulation unit 4 is removed. As a result, the first free end 61e of the first switching unit 61 is moved to the first shaft attaching and detaching unit 513 by the elastic support units 615 and 635, and the first free end 63e of the second switching unit 63 is moved in a direction in which the first free end 63e of the second switching unit 63 moves away from the fourth shaft 551a. Consequently, the fourth shaft 551a is separated from the fourth shaft receiving unit 555.

In the present invention, however, the second lock 8 prevents the second switching unit 63 from being moved in a direction in which the second switching unit 63 moves away from the fourth shaft 551a while the door body 31 is rotated about the second rotational axis Y. In the present invention, therefore, it is possible for the second lock 8 to prevent the fourth shaft 551a from being separated from the fourth shaft receiving unit 555 even when external force is applied to the first lock transfer unit 73 while the door body 31 is rotated about the second rotational axis Y.

In conclusion, in a case in which both the first lock 7 and the second lock 8 are provided at the door 3, it is possible to switch between the rotational axes X and Y only when external force is applied to both the first lock transfer unit 73 and the second lock transfer unit 85. Consequently, it is possible to prevent the door body 31 from being separated from both the first hinge 51 and the third hinge 55 even when external force is applied to any one of the lock transfer units during the rotation of the door body 31.

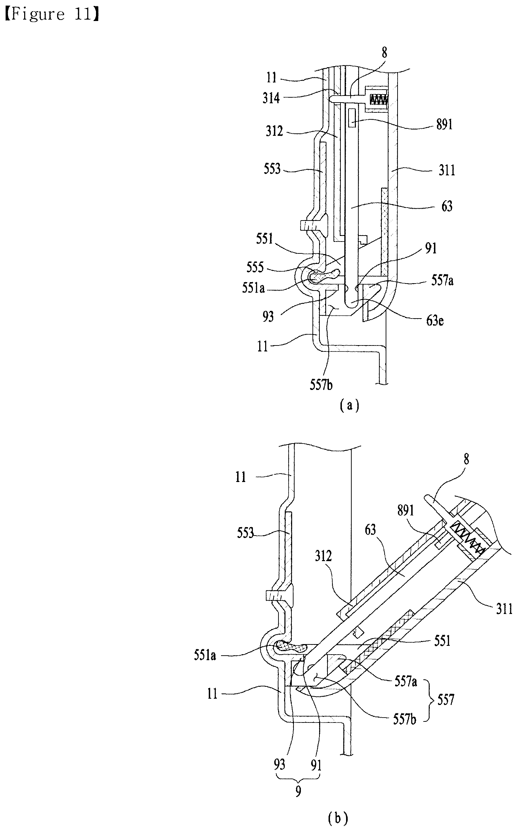

Meanwhile, the effects obtained by the second lock 8 may also be obtained by a withdrawal prevention unit 9 shown in FIG. 11.

As shown in FIG. 11, the withdrawal prevention unit 9 includes a first withdrawal prevention unit 91 provided at the second switching unit 63 and a second withdrawal prevention unit 93 provided at the fourth shaft attaching and detaching unit 552 such that the second withdrawal prevention unit 93 is detachably coupled to the second switching unit 63.

The first withdrawal prevention unit 91 may be configured as a groove formed in the outer circumference of the second switching unit 63. In this case, the second withdrawal prevention unit 93 may be configured as a protrusion provided at the inside of the flange through hole 557b such that the second withdrawal prevention unit 93 is inserted into the first withdrawal prevention unit 91.

In a case in which the withdrawal prevention unit 9 is provided as described above, it is possible to prevent the second switching unit 63 from being separated from the flange through hole 557b even when external force is applied to the first lock transfer unit 73 while the door body 31 is rotated about the second rotational axis Y.

In the present invention, therefore, it is possible to prevent the fourth shaft 551a from being separated from the fourth shaft receiving unit 555 even when external force is applied to the first lock transfer unit 73 while the door body 31 is rotated about the second rotational axis Y.

The laundry treating apparatus 100 according to the present invention may include only the withdrawal prevention unit 9, excluding the first lock 7 and the second lock 8. Alternatively, the laundry treating apparatus 100 according to the present invention may include the first lock 7 and either one selected from between the second lock 8 and the withdrawal prevention unit 9. Alternatively, the laundry treating apparatus 100 according to the present invention may include all of the first lock 7, the second lock 8, and the withdrawal prevention unit 9.

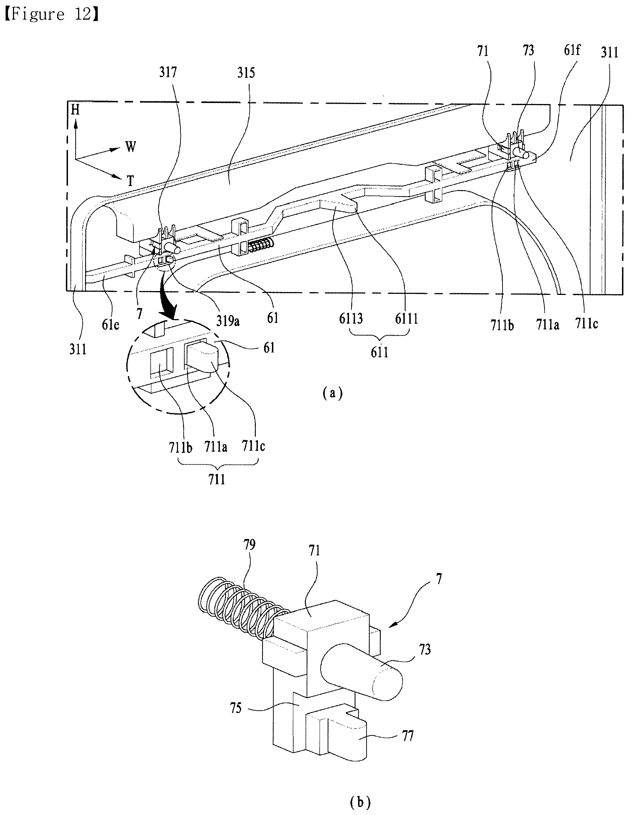

FIG. 12 is a view showing another embodiment of the first lock 7.

The first lock 7 according to the previous embodiment is coupled to the manipulation unit 4 to fix the position of the first switching unit 61, whereas the first lock 7 according to this embodiment is detachably provided at the first switching unit 61 to fix the position of the first switching unit 61.

That is, the first lock 7 according to this embodiment may include a first lock body 71 configured to reciprocate in the thickness direction T of the door 3, a first lock support unit 79 to elastically support the first lock body 71, a first lock transfer unit 73 to move the first lock body 71 in a direction in which the first lock body 71 becomes more distant from the first switching unit 61 when the introduction port 111 is closed by the door body 31, and a first lock fastening unit 711 to couple the first lock body 71 to the first switching unit 61 based on whether the first lock transfer unit 73 contacts the front panel 11.

The first lock body 71 is reciprocated in the door 3 while being guided by the first guide 317, which is provided at the outer frame 311.

The first lock support unit 79 may be configured as a spring connecting the first lock body 71 with the outer frame 311 to push the first lock body 71 toward the inner frame 312.

The first lock transfer unit 73 protrudes from the first lock body 71 such that the first lock transfer unit 73 is exposed out of the door body 31 through the through hole (the second through hole) 313 (see FIG. 7), which is provided in the inner frame 312.

The first lock fastening unit 711 is a means for separating the first lock body 71 from the first switching unit 61 when the introduction port 111 is closed by the door body 31 and for fixing the first lock body 71 to the first switching unit 61 when the introduction port 111 is opened by the door body 31.

To this end, the first lock fastening unit 711 may include a first fixing unit 711a and a second fixing unit 711b spaced apart from each other by a predetermined distance in a longitudinal direction W of the first switching unit 61 and a third fixing unit 711c provided at the first lock body 71 such that the third fixing unit 711c is inserted into either one selected from between the first fixing unit 711a and the second fixing unit 711b.

In this case, the third fixing unit 711c may be provided at a first lock flange 75 extending from the first lock body 71 toward a space defined between the first switching unit 61 and the outer frame 311.

In this embodiment, the first shaft 511b is prevented from being separated from the first shaft receiving unit 513b when the third fixing unit 711c is inserted into the first fixing unit 711a, and the fourth shaft 551a is prevented from being withdrawn from the fourth shaft receiving unit 555 when the third fixing unit 711c is inserted into the second fixing unit 711b.

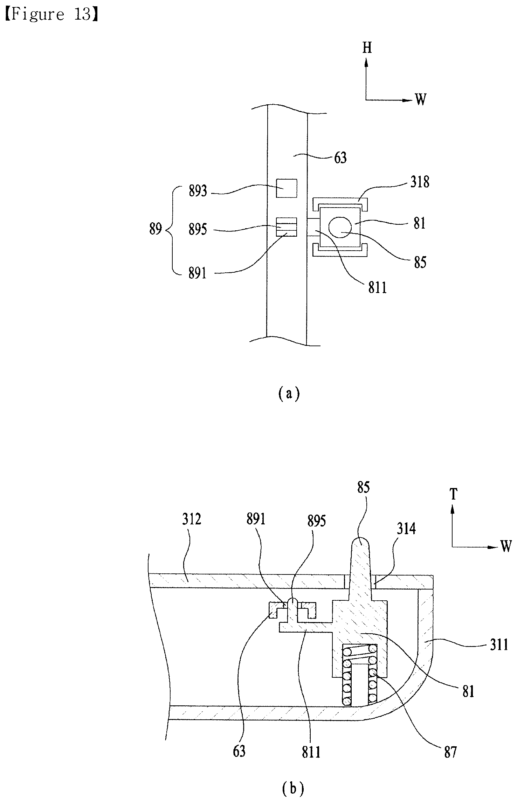

FIG. 13 is a view showing another embodiment of the second lock 8.

The second lock 8 according to the previous embodiment may include a second lock body 81 configured to reciprocate in the thickness direction T of the door 3, a second lock support unit 87 to elastically support the second lock body 81, a second lock transfer unit 85 to move the second lock body 81 in a direction in which the second lock body 81 becomes more distant from the second switching unit 63 when the introduction port 111 is closed by the door body 31, and a second lock fastening unit 89 to couple the second lock body 81 to the second switching unit 63 based on whether the second lock transfer unit 85 contacts the front panel 11.

The second lock transfer unit 85 protrudes from the second lock body 81 such that the second lock transfer unit 85 is exposed out of the door body 31 through the through hole 314, which is provided in the inner frame 312.

The second lock fastening unit 89 is a means for separating the second lock body 81 from the second switching unit 63 when the introduction port 111 is closed by the door body 31 and for fixing the second lock body 81 to the second switching unit 63 when the introduction port 111 is opened by the door body 31.

The second lock fastening unit 89 may include a first fastening unit 891 and a second fastening unit 893 spaced apart from each other by a predetermined distance in a longitudinal direction H of the second switching unit 63 (in a height direction of the door 3) and a third fastening unit 895 provided at the second lock body 81 such that the third fastening unit 895 is inserted into either one selected from between the first fastening unit 891 and the second fastening unit 893.

In this case, the third fastening unit 895 may be provided at a second lock flange 811 extending from the second lock body 81 toward a space defined between the second switching unit 63 and the outer frame 311.

In this embodiment, the first shaft 511b is prevented from being separated from the first shaft receiving unit 513b when the third fastening unit 895 is inserted into the first fastening unit 891, and the fourth shaft 551a is prevented from being withdrawn from the fourth shaft receiving unit 555 when the third fastening unit 895 is inserted into the second fastening unit 893.

As is apparent from the above description, the present invention has the effect of providing a laundry treating apparatus configured such that a door is rotated in different directions to open an introduction port, through which laundry is introduced.

In addition, the present invention has the effect of providing a laundry treating apparatus that enables a user to switch between rotational axes of a door.

In addition, the present invention has the effect of providing a laundry treating apparatus that prevents switching between rotational axes of a door while the door opens an introduction port.

It will be apparent to those skilled in the art that various modifications and variations can be made in the present invention without departing from the scope of the inventions. The scope of the invention is defined by the scope of the appended claims.

## Claims

1. A laundry treating apparatus (100) comprising:
a cabinet (1) having an introduction port (111);
a laundry receiving unit (2) located in the cabinet (1) to receive laundry introduced through the introduction port (111);
a door (3) configured to open and close the introduction port (111);
a first hinge (51) comprising a first shaft (511b) provided at either one selected from between the cabinet (1) and the door (3) to define a first rotational axis of the door (3), and a first shaft receiving unit (513b) provided at the other one selected from between the cabinet (1) and the door (3) such that the first shaft (511b) is detachably received in the first shaft receiving unit (513b);
a second hinge (53) comprising a second shaft (531c) coupled to the door (3) to define the first rotational axis (X) together with the first shaft (511b), and a third shaft (533c) configured to rotatably fix the second shaft (531c) to the cabinet (1) and to define a second rotational axis of the door (3);
a third hinge (55) comprising a fourth shaft (551a) provided at either one selected from between the cabinet (1) and the door (3) to define the second rotational axis together with the third shaft (533c), and a fourth shaft receiving unit (555) provided at the other one selected from between the cabinet (1) and the door (3) such that the fourth shaft (551a) is detachably received in the fourth shaft receiving unit (555);
a first switching unit (61) provided in the door (3) in a reciprocating fashion to open and close the first shaft receiving unit (513b); and
a second switching unit (63) provided in the door (3) in a reciprocating fashion to open and close the fourth shaft receiving unit (555), the second switching unit (63) being configured to close the fourth shaft receiving unit (555) when the first switching unit (61) moves in a direction in which the first shaft receiving unit (513b) is opened;
a switching unit receiving unit (557) provided in the third hinge (55), into which a free end of the second switching unit (63) to close the fourth shaft receiving unit (555) is inserted,
**characterized in that** the laundry treating apparatus further comprising:
a withdrawal prevention unit (9) configured to detachably couple the second switching unit (63) to the third hinge (55) when the second switching unit (63) closes the fourth shaft receiving unit (555),
wherein the withdrawal prevention unit (9) comprises:
a first withdrawal prevention unit (91) provided at either one selected from between the second switching unit (63) and the switching unit receiving unit (557), and
a second withdrawal prevention unit (93) provided at the other one selected from between the second switching unit (63) and the switching unit receiving unit (557) such that the second withdrawal prevention unit (93) is detachably coupled to the first withdrawal prevention unit (91) when the door (3) is rotated about the second rotational axis (Y).

2. The laundry treating apparatus (100) according to claim 1, wherein
the first withdrawal prevention unit (91) is configured as a groove formed in an outer circumference of the second switching unit (63), and
the second withdrawal prevention unit (93) is configured as a protrusion, which is inserted into the groove.

3. The laundry treating apparatus (100) according to claim 1 or 2, further comprising:
a manipulation unit (4) configured to move the first switching unit (61).

4. The laundry treating apparatus (100) according to any one of claims 1 to 3, further comprising:
a first lock (7) configured to fix a position of the first switching unit (61) when the door (3) opens the introduction port (111); and
a second lock (8) configured to fix a position of the second switching unit (63) when the door (3) opens the introduction port (111).

5. The laundry treating apparatus (100) according to claim 4, wherein the second lock (8) is configured to be separated from the second switching unit (63) when the door (3) closes the introduction port (111) and to be coupled to the second switching unit (63) when the door (3) opens the introduction port (111).

6. The laundry treating apparatus (100) according to claim 4 or 5, wherein the second lock (8) comprises:
a second lock body (81) configured to reciprocate in the door (3) in a thickness direction of the door (3);
a second lock transfer unit (85) configured to move the second lock body (81) in a direction in which the second lock body (81) becomes more distant from the introduction port (111) when the door (3) closes the introduction port (111);
a second lock support unit (87) configured to elastically support the second lock body (81) such that the second lock body (81) is pushed toward the introduction port (111); and
a second lock fastening unit (89) configured to separate the second lock body (81) from the second switching unit (63) when the door (3) closes the introduction port (111) and to connect the second lock body (81) to the second switching unit (63) when the door (3) opens the introduction port (111).

7. The laundry treating apparatus (100) according to claim 6, wherein the second lock fastening unit (89) comprises:
a first fastening unit (891) provided at the second switching unit (63); and
a second fastening unit (893) provided at the second lock body (81) such that the second fastening unit (893) is coupled to the first fastening unit (891).

8. The laundry treating apparatus (100) according to claim 6, wherein the second lock fastening unit (89) comprises:
a first fastening unit (891) and a second fastening unit (893) provided at the second switching unit (63), the first fastening unit (891) and the second fastening unit (893) being spaced apart from each other by a predetermined distance in a direction in which the second switching unit (63) is moved;
a second lock flange (811) protruding from the second lock body (81) toward the second switching unit (63); and
a third fastening unit (895) provided at the second lock flange (811) such that the third fastening unit (895) is coupled to either one selected from between the first fastening unit (891) and the second fastening unit (893) based on a position of the second switching unit (63).

9. The laundry treating apparatus (100) according to any one of claims 4 to 8, wherein the first lock (7) comprises:
a first lock body (71) configured to reciprocate in a width direction of the door (3), the first lock body (71) being detachably provided at the manipulation unit (4);
a first lock support unit (79) configured to elastically support the first lock body (71); and
a first lock transfer unit (73) configured to separate the first lock body (71) from the manipulation unit (4) when the door (3) closes the introduction port (111) and to couple the first lock body (71) to the manipulation unit (4) when the door (3) opens the introduction port (111).

10. The laundry treating apparatus (100) according to any one of claims 4 to 8, wherein the first lock (7) comprises:
a first lock body (71) configured to reciprocate in the door (3) in a thickness direction of the door (3);
a second lock transfer unit (85) configured to move the first lock body (71) in a direction in which the first lock body (71) becomes more distant from the introduction port (111) while contacting the cabinet (1) when the door (3) closes the introduction port (111);
a first lock support unit (79) configured to elastically support the first lock body (71) such that the first lock body (71) is pushed toward the introduction port (111);
a first fixing unit (711a) and a second fixing unit (711b) spaced apart from each other by a predetermined distance in a direction in which the first switching unit (61) is moved;
a first lock flange (75) provided at the first lock body (71); and
a third fixing unit (711c) provided at the first lock flange (75) such that the third fixing unit (711c) is coupled to either one selected from between the first fixing unit (711a) and the second fixing unit (711b) based on a position of the first switching unit (61).

## Patentansprüche

1. Wäschebehandlungsvorrichtung (100), die aufweist:
einen Kasten (1) mit einer Einführungsöffnung (111);
eine Wäscheaufnahmeeinheit (2), die in dem Kasten (1) angeordnet ist, um durch die Einführungsöffnung (111) eingeführte Wäsche aufzunehmen;
eine Tür (3), die konfiguriert ist, um die Einführungsöffnung (111) zu öffnen und zu schließen;
ein erstes Scharnier (51), das aufweist: eine erste Welle (511b), die entweder an dem Kasten (1) oder der Tür (3) bereitgestellt ist, um eine erste Drehachse der Tür (3) zu definieren, und eine erste Wellenaufnahmeeinheit (513b), die an dem/der anderen von dem Kasten (1) und der Tür (3) bereitgestellt ist , so dass die erste Welle (511b) in der ersten Wellenaufnahmeeinheit (513b) abnehmbar aufgenommen ist;
ein zweites Scharnier (53), das aufweist: eine mit der Tür (3) gekoppelte zweite Welle (531c), um die erste Drehachse (X) zusammen mit der ersten Welle (511b) zu definieren, und eine dritte Welle (533c), die konfiguriert ist, um die zweite Welle (531c) drehbar an dem Kasten (1) zu fixieren und eine zweite Drehachse der Tür (3) zu definieren;
ein drittes Scharnier (55), das aufweist: eine vierte Welle (551a), die entweder an dem Kasten (1) oder der Tür (3) bereitgestellt ist, um zusammen mit der dritten Welle (533c) die zweite Drehachse der Tür (3) zu definieren, und eine vierte Wellenaufnahmeeinheit (555), die an dem/der anderen von dem Kasten (1) und der Tür (3) bereitgestellt ist, so dass die vierte Welle (551a) in der vierten Wellenaufnahmeeinheit (555) abnehmbar aufgenommen ist;
eine erste Schalteinheit (61), die in einer hin und her beweglichen Weise in der Tür (3) bereitgestellt ist, um die erste Wellenaufnahmeeinheit (513b) zu öffnen und zu schließen; und
eine zweite Schalteinheit (63), die in einer hin und her beweglichen Weise in der Tür (3) bereitgestellt ist, um die vierte Wellenaufnahmeeinheit (555) zu öffnen und zu schließen, wobei die zweite Schalteinheit (63) konfiguriert ist, um die vierte Wellenaufnahmeeinheit (555) zu schließen, wenn die erste Schalteinheit (61) sich in eine Richtung bewegt, in der die erste Wellenaufnahmeeinheit (513b) geöffnet wird;
eine Schalteinheitsaufnahmeeinheit (557), die in dem dritten Scharnier (55) bereitgestellt ist, in welches ein freies Ende der zweiten Schalteinheit (63) zum Schließen der vierten Wellenaufnahmeeinheit (555) eingesetzt ist,
**dadurch gekennzeichnet, dass** die Wäschebehandlungsvorrichtung ferner aufweist:
eine Herausziehschutzeinheit (9), die konfiguriert ist, um die zweite Schalteinheit (63) abnehmbar mit dem dritten Scharnier (55) zu koppeln, wenn die zweite Schalteinheit (63) die vierte Wellenaufnahmeeinheit (555) schließt,
wobei die Herausziehschutzeinheit (9) aufweist:
eine erste Herausziehschutzeinheit (91), die entweder an der zweiten Schalteinheit (63) oder der Schalteinheitsaufnahmeeinheit (557) bereitgestellt ist, und
eine zweite Herausziehschutzeinheit (93), die an der jeweils anderen der zweiten Schalteinheit (63) und der Schalteinheitsaufnahmeeinheit (557) bereitgestellt ist, so dass die zweite Herausziehschutzeinheit (93) abnehmbar mit der ersten Herausziehschutzeinheit (91) gekoppelt wird, wenn die Tür (3) um die zweite Drehachse (Y) gedreht wird.

2. Wäschebehandlungsvorrichtung (100) nach Anspruch 1, wobei
die erste Herausziehschutzeinheit (91) als eine Nut, die in einem Außenumfang der zweiten Schalteinheit (63) ausgebildet ist, konfiguriert ist, und
die zweite Herausziehschutzeinheit (93) als ein Vorsprung, der in die Nut eingesetzt ist, konfiguriert ist.

3. Wäschebehandlungsvorrichtung (100) nach Anspruch 1 oder 2, die ferner aufweist:
eine Handhabungseinheit (4), die konfiguriert ist, um die erste Schalteinheit (61) zu bewegen.

4. Wäschebehandlungsvorrichtung (100) nach einem der Ansprüche 1 bis 3, die ferner aufweist:
eine erste Arretierung (7), die konfiguriert ist, um eine Position der ersten Schalteinheit (61) zu fixieren, wenn die Tür (3) die Einführungsöffnung (111) öffnet; und
eine zweite Arretierung (8), die konfiguriert ist, um eine Position der zweiten Schalteinheit (63) zu fixieren, wenn die Tür (3) die Einführungsöffnung (111) öffnet.

5. Wäschebehandlungsvorrichtung (100) nach Anspruch 4, wobei die zweite Arretierung (8) konfiguriert ist, um von der zweiten Schalteinheit (63) getrennt zu werden, wenn die Tür (3) die Einführungsöffnung (111) schließt, und mit der zweiten Schalteinheit (63) gekoppelt zu werden, wenn die Tür (3) die Einführungsöffnung (111) öffnet.

6. Wäschebehandlungsvorrichtung (100) nach Anspruch 4 oder 5, wobei die zweite Arretierung (8) aufweist:
einen zweiten Arretierungskörper (81), der konfiguriert ist, um sich in der Tür (3) in einer Dickenrichtung der Tür (3) hin und her zu bewegen;
eine zweite Arretierungstransfereinheit (85), die konfiguriert ist, um den zweiten Arretierungskörper (81) in eine Richtung zu bewegen, in welcher der zweite Arretierungskörper (81) von der Einführungsöffnung (111) weiter entfernt wird, wenn die Tür (3) die Einführungsöffnung (111) schließt;
eine zweite Arretierungshalteeinheit (87), die konfiguriert ist, um den zweiten Arretierungskörper (81) elastisch zu halten, so dass der zweite Arretierungskörper (81) in Richtung der Einführungsöffnung (111) geschoben wird; und
eine zweite Arretierungsbefestigungseinheit (89), die konfiguriert ist, um den zweiten Arretierungskörper (81) von der zweiten Schalteinheit (63) zu trennen, wenn die Tür (3) die Einführungsöffnung (111) schließt, und um den zweiten Arretierungskörper (81) mit der zweiten Schalteinheit (63) zu verbinden, wenn die Tür (3) die Einführungsöffnung (111) öffnet.

7. Wäschebehandlungsvorrichtung (100) nach Anspruch 6, wobei die zweite Arretierungsbefestigungseinheit (89) aufweist:
eine erste Befestigungseinheit (891), die an der zweiten Schalteinheit (63) bereitgestellt ist;
eine zweite Befestigungseinheit (893), die an dem zweiten Arretierungskörper (81) bereitgestellt ist, so dass die zweite Befestigungseinheit (893) mit der ersten Befestigungseinheit (891) gekoppelt ist.

8. Wäschebehandlungsvorrichtung (100) nach Anspruch 6, wobei die zweite Arretierungsbefestigungseinheit (89) aufweist:
eine erste Befestigungseinheit (891) und eine zweite Befestigungseinheit (893), die an der zweiten Schalteinheit (63) bereitgestellt sind, wobei die erste Befestigungseinheit (891) und die zweite Befestigungseinheit (893) in einer Richtung, in der die zweite Schalteinheit (63) bewegt wird, um einen vorbestimmten Abstand voneinander beabstandet sind;
einen zweiten Arretierungsflansch (811), der von dem zweiten Arretierungskörper (81) in Richtung der zweiten Schalteinheit (63) vorsteht; und
eine dritte Befestigungseinheit (895), die an dem zweiten Arretierungsflansch (811) bereitgestellt ist, so dass die dritte Befestigungseinheit (895) basierend auf einer Position der zweiten Schalteinheit (63) ausgewählt zwischen der ersten Befestigungseinheit (891) und der zweiten Befestigungseinheit (893) mit einer von beiden gekoppelt ist.

9. Wäschebehandlungsvorrichtung (100) nach einem der Ansprüche 4 bis 8, wobei die erste Arretierung (7) aufweist:
einen ersten Arretierungskörper (71), der konfiguriert ist, um sich in einer Breitenrichtung der Tür (3) hin und her zu bewegen, wobei der erste Arretierungskörper (71) abnehmbar an der Handhabungseinheit (4) bereitgestellt ist;
eine erste Arretierungshalteeinheit (79), die konfiguriert ist, um den ersten Arretierungskörper (71) elastisch zu halten; und
eine erste Arretierungstransfereinheit (73), die konfiguriert ist, um den ersten Arretierungskörper (71) von der Handhabungseinheit (4) zu trennen, wenn die Tür (3) die Einführungsöffnung (111) schließt, und um den ersten Arretierungskörper (71) mit der Handhabungseinheit (4) zu koppeln, wenn die Tür (3) die Einführungsöffnung (111) öffnet.

10. Wäschebehandlungsvorrichtung (100) nach einem der Ansprüche 4 bis 8, wobei die erste Arretierung (7) aufweist:
einen ersten Arretierungskörper (71), der konfiguriert ist, um die Tür (3) in einer Dickenrichtung der Tür (3) hin und her zu bewegen;
eine zweite Arretierungstransfereinheit (85), die konfiguriert ist, um den ersten Arretierungskörper (71) in eine Richtung zu bewegen, in welcher der erste Arretierungskörper (71) weiter weg von der Einführungsöffnung (111) kommt, während er den Kasten (1) berührt, wenn die Tür (3) die Einführungsöffnung (111) schließt;
eine erste Arretierungshalteeinheit (79), die konfiguriert ist, um den ersten Arretierungskörper (71) elastisch zu halten, so dass der erste Arretierungskörper (71) in Richtung der Einführungsöffnung (111) geschoben wird:
eine erste Fixierungseinheit (711a) und eine zweite Fixierungseinheit (711b), die in einer Richtung, in der die erste Schalteinheit (61) bewegt wird, um einen vorbestimmten Abstand voneinander beabstandet sind;
einen ersten Arretierungsflansch (75), der an dem ersten Arretierungskörper (71) bereitgestellt ist; und
eine dritte Fixierungseinheit (711c), die an dem ersten Arretierungsflansch (75) bereitgestellt ist, so dass die dritte Fixierungseinheit (711c) basierend auf einer Position der ersten Schalteinheit (61) ausgewählt zwischen der ersten Fixierungseinheit (711a) und der zweiten Fixierungseinheit (711b) mit einer von beiden gekoppelt ist.

## Revendications

1. Appareil de traitement du linge (100) comprenant :
une armoire (1) ayant un orifice d'introduction (111) ;
une unité de réception du linge (2) située dans l'armoire (1) pour recevoir le linge introduit à travers l'orifice d'introduction (111) ;
une porte (3) configurée pour ouvrir et fermer l'orifice d'introduction (111) ;
une première charnière (51) comprenant un premier arbre (511b) prévu au niveau de l'une sélectionnée parmi l'armoire (1) et la porte (3) pour définir un premier axe de rotation de la porte (3), et une unité de réception de premier arbre (513b) prévue au niveau de l'autre sélectionnée parmi l'armoire (1) et la porte (3) de sorte que le premier arbre (511b) soit reçu de manière amovible dans l'unité de réception de premier arbre (513b) ;
une deuxième charnière (53) comprenant un deuxième arbre (531c) couplé à la porte (3) pour définir le premier axe de rotation (X) solidairement avec le premier arbre (511b), et un troisième arbre (533c) configuré pour fixer, de manière à pouvoir tourner, le deuxième arbre (531c) à l'armoire (1) et pour définir un deuxième axe de rotation de la porte (3) ;
une troisième charnière (55) comprenant un quatrième arbre (551a) prévu au niveau de l'une sélectionnée parmi l'armoire (1) et la porte (3) pour définir le deuxième axe de rotation solidairement avec le troisième arbre (533c), et une unité de réception de quatrième arbre (555) prévue au niveau de l'autre sélectionnée parmi l'armoire (1) et
la porte (3) de sorte que le quatrième arbre (551a) soit reçu de manière amovible dans l'unité de réception de quatrième arbre (555) ;
une première unité de commutation (61) prévue dans la porte (3) en va-et-vient pour ouvrir et fermer l'unité de réception de premier arbre (513b) ; et
une deuxième unité de commutation (63) prévue dans la porte (3) en va-et-vient pour ouvrir et fermer l'unité de réception de quatrième arbre (555), la deuxième unité de commutation (63) étant configurée pour fermer l'unité de réception de quatrième arbre (555) lorsque la première unité de commutation (61) se déplace dans une direction dans laquelle l'unité de réception de premier arbre (513b) est ouverte ;
une unité de réception d'unité de commutation (557) prévue dans la troisième charnière (55), dans laquelle une extrémité libre de la deuxième unité de commutation (63) pour fermer l'unité de réception de quatrième arbre (555) est insérée,
**caractérisé en ce que** l'appareil de traitement du linge comprend en outre :
une unité d'interdiction de retrait (9) configurée pour coupler, de manière amovible,
la deuxième unité de commutation (63) à la troisième charnière (55) lorsque la deuxième unité de commutation (63) ferme l'unité de réception de quatrième arbre (555),
dans lequel l'unité d'interdiction de retrait (9) comprend :
une première unité d'interdiction de retrait (91) prévue au niveau de l'une sélectionnée parmi la deuxième unité de commutation (63) et l'unité de réception d'unité de commutation (557), et
une deuxième unité d'interdiction de retrait (93) prévue au niveau de l'autre sélectionnée parmi la deuxième unité de commutation (63) et l'unité de réception d'unité de commutation (557) de sorte que la deuxième unité d'interdiction de retrait (93) soit couplée, de manière amovible, à la première unité d'interdiction de retrait (91) lorsque la porte (3) est tournée autour du deuxième axe de rotation (Y).

2. Appareil de traitement du linge (100) selon la revendication 1, dans lequel
la première unité d'interdiction de retrait (91) est configurée sous la forme d'une rainure formée dans une circonférence extérieure de la deuxième unité de commutation (63), et
la deuxième unité d'interdiction de retrait (93) est configurée sous la forme d'une saillie qui est insérée dans la rainure.

3. Appareil de traitement du linge (100) selon la revendication 1 ou 2, comprenant en outre :
une unité de manipulation (4) configurée pour déplacer la première unité de commutation (61).

4. Appareil de traitement du linge (100) selon l'une quelconque des revendications 1 à 3, comprenant en outre :
un premier verrou (7) configuré pour fixer une position de la première unité de commutation (61) lorsque la porte (3) ouvre l'orifice d'introduction (111) ; et
un deuxième verrou (8) configuré pour fixer une position de la deuxième unité de commutation (63) lorsque la porte (3) ouvre l'orifice d'introduction (111).

5. Appareil de traitement du linge (100) selon la revendication 4, dans lequel le deuxième verrou (8) est configuré pour être séparé de la deuxième unité de commutation (63) lorsque la porte (3) ferme l'orifice d'introduction (111) et être couplé à la deuxième unité de commutation (63) lorsque la porte (3) ouvre l'orifice d'introduction (111).

6. Appareil de traitement du linge (100) selon la revendication 4 ou 5, dans lequel le deuxième verrou (8) comprend :
un corps de deuxième verrou (81) configuré pour se déplacer en va-et-vient dans la porte (3) dans une direction d'épaisseur de la porte (3) ;
une unité de transfert de deuxième verrou (85) configurée pour déplacer le corps de deuxième verrou (81) dans une direction dans laquelle le corps de deuxième verrou (81) s'éloigne de l'orifice d'introduction (111) lorsque la porte (3) ferme l'orifice d'introduction (111) ;
une unité de support de deuxième verrou (87) configurée pour supporter élastiquement le corps de deuxième verrou (81) de sorte que le corps de deuxième verrou (81) soit poussé vers l'orifice d'introduction (111) ; et
une unité de serrage de deuxième verrou (89) configurée pour séparer le corps de deuxième verrou (81) de la deuxième unité de commutation (63) lorsque la porte (3) ferme l'orifice d'introduction (111) et pour relier le corps de deuxième verrou (81) à la deuxième unité de commutation (63) lorsque la porte (3) ouvre l'orifice d'introduction (111).

7. Appareil de traitement du linge (100) selon la revendication 6, dans lequel l'unité de serrage de deuxième verrou (89) comprend :
une première unité de serrage (891) prévue au niveau de la deuxième unité de commutation (63) ; et
une deuxième unité de serrage (893) prévue au niveau du corps de deuxième verrou (81) de sorte que la deuxième unité de serrage (893) soit couplée à la première unité de serrage (891).

8. Appareil de traitement du linge (100) selon la revendication 6, dans lequel l'unité de serrage de deuxième verrou (89) comprend :
une première unité de serrage (891) et une deuxième unité de serrage (893) prévues au niveau de la deuxième unité de commutation (63), la première unité de serrage (891) et la deuxième unité de serrage (893) étant espacées l'une de l'autre d'une distance prédéterminée dans une direction dans laquelle la deuxième unité de commutation (63) est déplacée ;
une bride de deuxième verrou (811) saillante depuis le corps de deuxième verrou (81) vers la deuxième unité de commutation (63) ; et
une troisième unité de serrage (895) prévue au niveau de la bride de deuxième verrou (811) de sorte que la troisième unité de serrage (895) soit couplée à l'une sélectionnée parmi la première unité de serrage (891) et la deuxième unité de serrage (893) sur la base d'une position de la deuxième unité de commutation (63).

9. Appareil de traitement du linge (100) selon l'une quelconque des revendications 4 à 8, dans lequel le premier verrou (7) comprend :
un corps de premier verrou (71) configuré pour se déplacer en va-et-vient dans une direction de largeur de la porte (3), le corps de premier verrou (71) étant prévu de manière amovible au niveau de l'unité de manipulation (4) ;
une unité de support de premier verrou (79) configurée pour supporter élastiquement le corps de premier verrou (71) ; et
une unité de transfert de premier verrou (73) configurée pour séparer le corps de premier verrou (71) de l'unité de manipulation (4) lorsque la porte (3) ferme l'orifice d'introduction (111) et pour coupler le corps de premier verrou (71) à l'unité de manipulation (4) lorsque la porte (3) ouvre l'orifice d'introduction (111).

10. Appareil de traitement du linge (100) selon l'une quelconque des revendications 4 à 8, dans lequel le premier verrou (7) comprend :
un corps de premier verrou (71) configuré pour se déplacer en va-et-vient dans la porte (3) dans une direction d'épaisseur de la porte (3) ;
une unité de transfert de deuxième verrou (85) configurée pour déplacer le corps de premier verrou (71) dans une direction dans laquelle le corps de premier verrou (71) s'éloigne de l'orifice d'introduction (111) tout en venant au contact de l'armoire (1) lorsque la porte (3) ferme l'orifice d'introduction (111) ;
une unité de support de premier verrou (79) configurée pour supporter élastiquement le corps de premier verrou (71) de sorte que le corps de premier verrou (71) soit poussé vers l'orifice d'introduction (111) ;
une première unité de fixation (711a) et une deuxième unité de fixation (711b) espacées l'une de l'autre d'une distance prédéterminée dans une direction dans laquelle la première unité de commutation (61) est déplacée ;
une bride de premier verrou (75) prévue au niveau du corps de premier verrou (71) ; et
une troisième unité de fixation (711c) prévue au niveau de la bride de premier verrou (75) de sorte que la troisième unité de fixation (711c) soit couplée à l'une sélectionnée parmi la première unité de fixation (711a) et la deuxième unité de fixation (711b) sur la base d'une position de la première unité de commutation (61).
